# EUROPEAN PATENT SPECIFICATION

(11) **EP 4 302 959 B1**
(45) Date of publication and mention of the grant of the patent: **26.03.2025**
(21) Application number: 22183635.6
(22) Date of filing: 07.07.2022
(51) Int. Cl.: B29C 43/52, B29C 33/06, B29C 70/44, B29C 35/08

(54) **MOLDING TOOL, METHOD OF MANUFACTURING THE SAME AND USE THEREOF FOR PRODUCING A COMPOSITE PART**
FORMWERKZEUG, VERFAHREN ZUR HERSTELLUNG DESSELBEN UND VERWENDUNG ZUR HERSTELLUNG EINES VERBUNDTEILS
OUTIL DE MOULAGE, SON PROCÉDÉ DE FABRICATION ET SON UTILISATION POUR LA PRODUCTION D'UNE PIÈCE COMPOSITE

(43) Date of publication of application: 10.01.2024
(73) Proprietor: Corebon AB, 213 76 Malmö (SE)
(72) Inventor: FROGNER, Kenneth, 242 92 Hörby (SE)
(74) Representative: Ström & Gulliksson AB

(56) References cited:
- EP-A1- 2 832 519
- DE-B4- 102011 053 867
- JP-A- S62 113 521
- US-A1- 2016 059 461
- US-A1- 2020 164 548

## Description

### FIELD OF THE INVENTION

The present invention relates to a molding tool for producing a composite part using induction heating, a method of manufacturing the molding tool, and use of said tool for producing a composite part with the tool.

### BACKGROUND

Over the past years, there has been an increasing interest in the use of lightweight materials in for instance the automotive and aerospace industry, where the main goal has been to reduce carbon emissions during transportation. For instance, it has been increasingly common that the vehicle or aircraft components are made of fiber composites.

When producing a fiber composite part, such as a car door or an aircraft component, it is important to have a controlled heating and ensure an even heat distribution throughout relevant areas of the part. There are several examples of molding tools for composite manufacturing in the prior art which all have different drawbacks. For instance, they suffer from large thermal mass to be heated up and cooled down, which means long cycle times and high energy consumption. Another common problem is uneven heating, which affects part performance and yield negatively. Large physical space demand and high capex investments are other common challenges with existing solutions as well as limitations in size or temperature.

Common heat sources are ovens, and heated autoclaves, heat cartridges, resistance wires, IR-lamps, all with their pros and cons. Environmental aspects are another important topic with certain energy sources, such as hot oil and high pressurized steam technologies.

Examples of composite production processes which typically uses the heat sources described and which suffer from the above-mentioned drawbacks are resin transfer molding and compression molding, normally used inside some type of press to keep two mold halves together. Other examples are vacuum infusion, vacuum bagging, and autoclave processing, where one of the mold halves is usually replaced by a flexible membrane or bag, or where the mold halves are pushed together by a pressure difference between the inside and the outside of the mold. EP 2 832 519 A1, US 2020/164548 A1 and DE 10 2011 053 867 A1 show known molding tools using induction heating means.

Hence, there is a need for improved molding tools for manufacturing of composite parts, which allow for short cycle times, are energy efficient and result in a high quality and yield, to enable cost efficient volume production. Further, the molding tools also need to be robust, cost efficient and easy to manufacture, with a long service life.

### SUMMARY OF THE INVENTION

An object of the present invention is to solve or at least mitigate the problems related to prior art. This object is achieved by means of the technique set forth in the appended independent claims; preferred embodiments being defined in the related dependent claims.

According to a first aspect, a molding tool for producing a composite part using induction heating is provided. The molding tool comprises a mold having a contact surface adapted to be in contact with a material to be transformed into a composite part, and an outer surface; at least one coil or at least one wire of a coil arranged on the outer surface of the mold; and at least one clamping means having a first end, a second end and an intermediate section extending between the first end and the second end, wherein at least one of the first end and second end is attached to the outer surface of the mold using welding, brazing or soldering, so as to at least partly fixate the at least one coil to the outer surface of the mold; wherein the intermediate section at least partially encloses the at least one wire or coil to hold said at least one wire or coil in place on the outer surface of the mold; and wherein the at least one wire or coil are electrically insulated from the mold and in operative communication with at least one processing means.

According to a second aspect, a method of manufacturing a molding tool according to the above is provided. The method includes providing a mold, having a contact surface adapted to be in contact with a material to be transformed into a composite part, and an outer surface; providing at least one coil or at least one wire of a coil and arranging the same on the outer surface of the mold; providing at least one clamping means having a first end, a second end, and an intermediate section extending between the first end and the second end; attaching at least one of the first end and second end of the at least one clamping means to the outer surface of the mold using welding, brazing or soldering, so as to at least partly fixate the at least one coil to the outer surface of the mold; whereby the intermediate section at least partially encloses the at least one wire or at least one coil to hold said at least one wire or coil in place on the outer surface of the mold; and wherein the at least one wire or coil are electrically insulated from the mold and in operative communication with at least one processing means.

According to a third aspect, a method of using a tool for producing a composite part is provided. The method includes providing a molding tool having at least one clamping means according to the above; placing a fiber and plastic material on the contact surface of the mold; closing the mold; applying a consolidation pressure on the material to be processed; and inductively heating the mold containing the material according to a predetermined time-temperature profile to consolidate and/or cure the material to produce the composite part.

According to a fourth aspect, another method of using a tool for producing a composite part provided. The method includes providing a molding tool having at least one clamping means according to the above; placing a fiber material to be processed on the contact surface of the mold; closing the mold; applying vacuum pressure and infusing the fiber material with a plastic material, the plastic material thereby forming part of the material to be processed; and inductively heating the mold containing the fiber and plastic material according to a predetermined time-temperature profile to produce a composite part.

In general, an advantage of using the clamping means is to be able to speed up and automate the manufacturing process of the induction heated molding tools compared to gluing the coils to the outer surface of the mold, and to be able to reach temperatures where glue does not work, e.g. for thermoplastic composites with PA, PC or PET matrix or high-end matrices such as PEEK, PEI and PPS which are widely used in the aerospace industry. In other words, the clamping means should withstand high-temperature applications.

### BRIEF DESCRIPTION OF THE DRAWINGS

By way of example, embodiments of the present invention will now be described with reference to the accompanying drawings, in which:
Fig. 1a is a cross-section view of a molding tool and a material according to an embodiment,
Fig. 1b is a cross-section view of a coil assembly attached to a mold of a molding tool according to an embodiment,
Fig. 2 is a schematic block diagram of a molding tool in relation to a processing means according to an embodiment,
Fig. 3 is a schematic view of a coil assembly attached to a mold according to an embodiment,
Fig. 4 is a perspective view of two wires of at least one coil clamped to a mold according to an embodiment,
Fig. 5 is a cross-section view of a clamping means attached to a mold according to an embodiment,
Figs. 6-22 are different cross-section views of at least one wire of a coil clamped to a mold by a clamping means,
Fig. 23 is a schematic block diagram showing a method of producing a composite part according to an embodiment,
Fig. 24 is a schematic block diagram showing a method of producing a composite part according to another embodiment,
Fig. 25 is a schematic view of part of a method of producing a composite part in a molding tool according to an embodiment, and
Fig. 26 is a schematic block diagram showing a method of manufacturing a molding tool.

### DETAILED DESCRIPTION OF EMBODIMENTS

Molding tools are often used to produce composite parts of different shapes. Typical parts to be produced are automotive vehicle parts, sports equipment, drones or aircraft parts as well as wind energy components, such as for instance body panels and structural components, e.g. car doors, aircraft and wind mill wings etc.. Tools applicable within the inventive concept disclosed herein are shell tools and solid tools, with single or multiple cavities. The inventive concept is directed mainly towards inductively heated tools for the manufacturing of composite articles.

Embodiments of the invention will now be described with reference to the accompanying drawings. The invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular embodiments illustrated in the accompanying drawings is not intended to be limiting of the invention. In the drawings, like numbers refer to like elements.

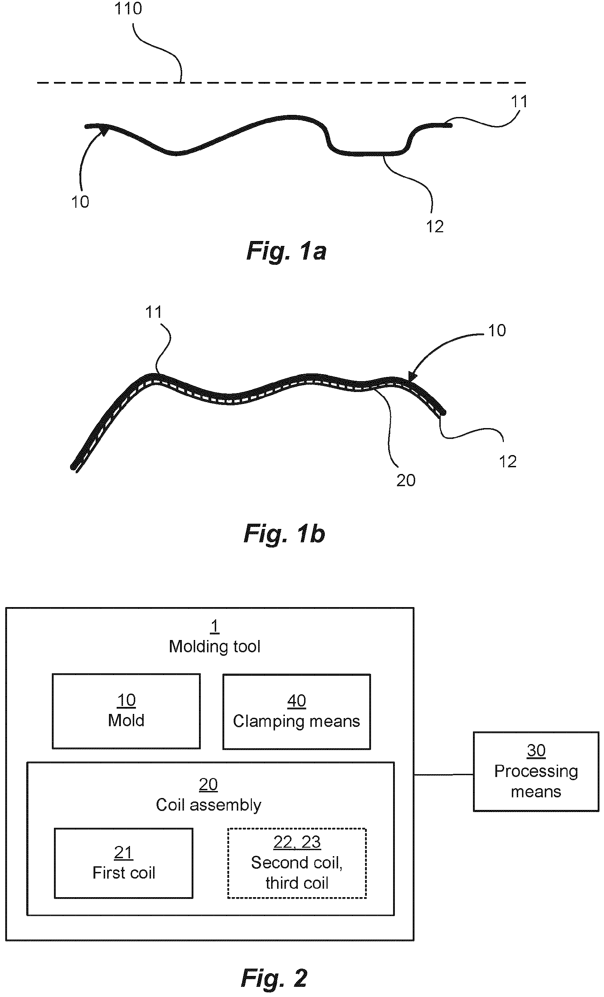

Before turning into a detailed description on the molding tool and the novel and inventive way of attaching coils to the mold 10, a molding tool in relation to a material will be briefly described with reference to Figs. 1a-b.

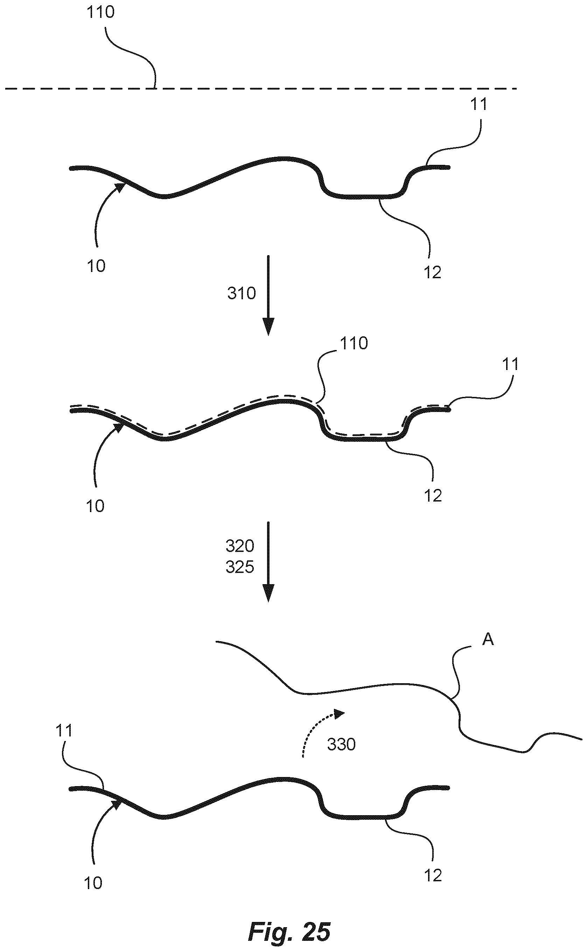

As illustrated in Fig. 1a and b, the mold 10, as seen from a cross-section view, has a body with a contact surface 11 and an outer surface 12. The mold body may be divided into several layers, which enables the transfer of heat from the outer surface 12 to the contact surface 11. The contact surface 11 is an inner region of the mold 10 configured to be facing a material 110 which is to be transformed into a composite part A (as illustrated in Fig. 25) during a molding process. The mold 10 may also be seen as a body having a cavity which is dimensioned and shaped into the desired shape of the part A to be produced. It is the contact surface 11 of the mold 10 which is configured to receive the material 110. For instance, a part A to be produced in the mold 10 of the molding tool is a car door, or any other composite part. The mold 10 may contain more than one cavity and thereby it may produce several components in a single production cycle, still referred to as a material 110 being transformed into a composite part A.

Hereafter, the contact surface 11 will be called the front side of the mold and the outer surface 12 will be called the back side of the mold 10. A coil assembly 20 is to be attached to the back side 12 of the mold, as soon will be further described. The heating of the molding tool is induced by the coil assembly 20 arranged on the back side 12 of the mold 10.

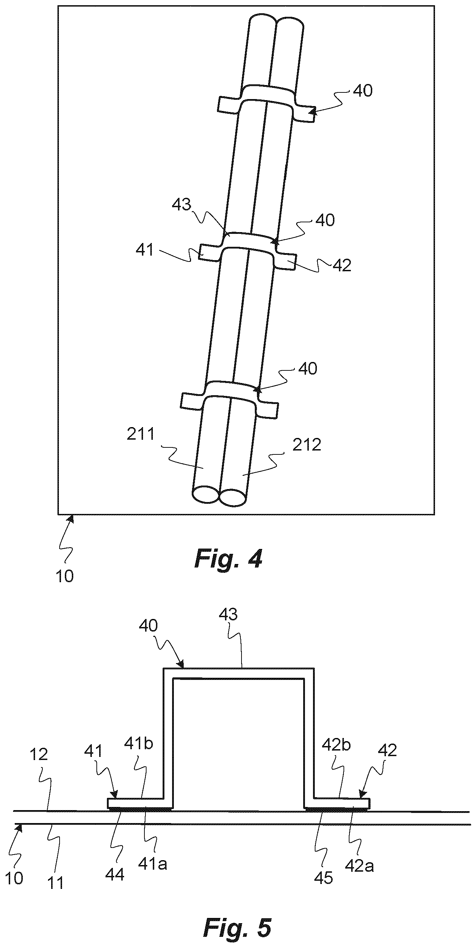

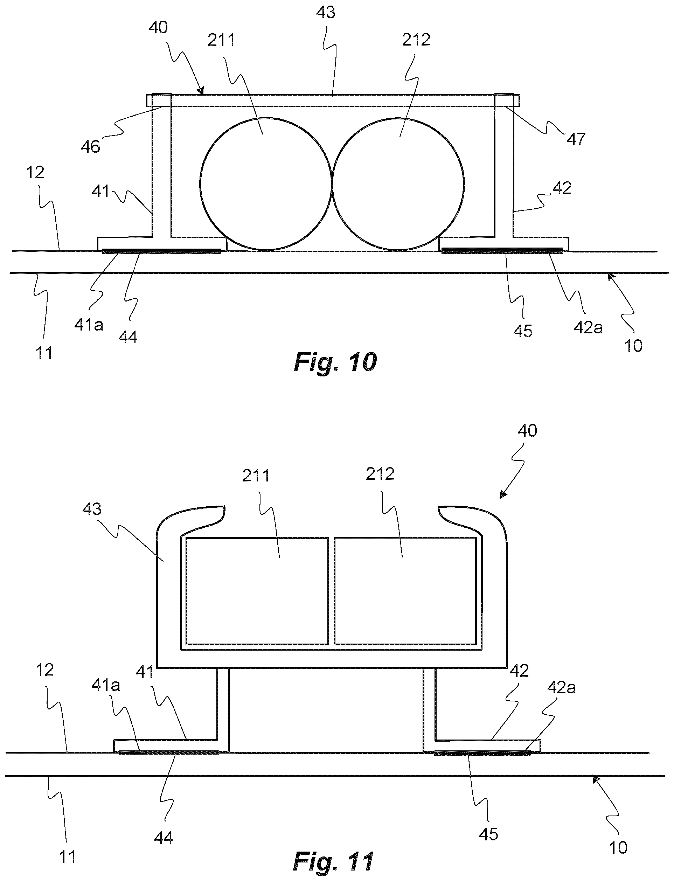

Fig. 1b shows an embodiment where a coil assembly 20 is attached to a mold 10 of the molding tool. The attachment of the coil assembly 20, which may include for instance a combination of main coils and perimeter coils, is illustrated by the dashed lines in Fig. 1b. The coils are attached to the back side 12 of the mold via clamping means. Preferably, at least one part/end of the clamping means is attached to the back side of the mold. For instance, the clamping means may be attached by welding, brazing or soldering. Optionally, the clamping means may be seen as a fixturing element onto which the at least one coil may be clipped or clamped in, see for instance Fig. 10, 11 and 22. Details on the clamping means is shown and described in relation to Figs. 5-22.

Typically, the mold 10 is made at least partially of a material chosen from a group consisting of carbon fiber composite materials or metals. The material is preferably a material with significant electrical conductivity to be able to be heated by induction, for example more than 1 Siemens/meter.

If the mold 10 is made of a carbon fiber composite material, the mold 10 may be a carbon fiber reinforced plastic (CFRP). The fiber reinforcement can also be a hybrid of carbon and another type of technical fiber such as glass fiber, basalt fiber etc.. The fibers can be continuous or chopped, unidirectional plies or multi-axial layups or randomly oriented fibers. In a preferred embodiment the fibers are woven. Different types of fibers and layups have their particular advantages, such as stiffness, coefficient of thermal expansion (CTE), electrical and thermal properties, and preferably a carbon fiber with high thermal conductivity such as pitch carbon fiber or high thermal conductivity polyacrylic nitrile carbon fibers is used to simplify uniform temperature generation. Similar choice applies to the matrix material, where easy and low temperature processing is advantageous, as well as high temperature resistance and high glass transition temperature. Also low CTE and long durability or service life are important properties. Examples of matrices can be epoxies, bismaleimides, polyimides, benzoxazines, phenolics and also silicones, and thermoplastics or semicrystallines such as polycarbonate (PC), polyphenylene-sulfide (PPS), polyetereterkotone (PEEK) etc.

If the mold 10 is made at least partially of metal, it may typically be in steel, aluminum, or an alloy such as invar. Nickel or coated steel is also common, but any metal works and might be beneficial depending on the particular application. The purpose of using a metal or a carbon fiber composite material is that the molding tool, and more importantly its mold 10, should be able to be heated inductively. Basically, the molding tool is a susceptor, meaning that it has the ability to absorb electromagnetic energy and convert it to heat. In this case, the molding tool is heated inductively via the coil assembly 20. During the molding process, the material 110 to be processed, which is typically a mix of a fiber and polymeric material, is configured to be heated by the inductively heated molding tool. The material 110 to be processed may also be a fiber material which is infused with a resin later on in the molding process. In total, the resin, or plastic material, to be infused during the molding process is regarded as being part of the material 110 to be processed.

In some cases, the mold 10 and the material 110 to be processed may be of similar material and might also absorb heat directly from the induction. The material 110 to be processed will be discussed in more detail below. The mold 10 can be single-sided to reduce costs when the requirements on one of the sides of the part is lower than the other and provide a more simple molding tool. It may alternatively be double-sided depending on the process and requirements, either as two independent molding tools, tool halves or as one molding tool where at least one coil is connected together, despite mechanically it might be two individual molds 10.

The material 110 to be processed in the mold 10, will be heated mainly due to its contact with the contact surface 11 but might also absorb a certain amount of energy directly from the induction heating if it contains carbon fiber. The material 110 is typically a composite material based on a mix of fiber material and polymeric material. As a non-limiting example, the material may contain multiple fiber layers, e.g. 10 layers of glass or carbon fibers embedded in a thermoset or thermoplastic matrix. The material can be made of a woven web of fibers, or for example chopped fibers, organized or randomly oriented. Optionally, the web is nonwoven. The matrix may be for example epoxy, polyester (PET), polypropylene (PP), polyamide (PA), polycarbonate (PC) or it can be a high-end amorphous or semicrystalline thermoplastic material such as polyphenylenesulfide (PPS), polyetherimide (PEI) or polyetereterketone (PEEK) etc. The fibers can also be of any other technical textile, such as flax fibers, aramid, ultra-high molecular weight polyethylene, etc. As a non-limiting example, glass fibers may be used as a reinforcement in a polycarbonate based matrix. The composite materials can also be built by hybrid fiber reinforcement, for example glass fiber and carbon fiber. Typical processing temperatures ranges from just above room temperature to about 450 degrees C, but can be even higher depending on the matrix material.

The part A is produced in the molding tool by heating the material 110 to be processed under pressure. Put differently, when the material 110 is heated by the inductively heated molding tool, the part A is being produced, either because there is a matrix material already there when the process starts, or because it is added during the process using an infusion process. Preferably, the material 110 is processed under vacuum pressure to reduce the risk of voids, pin holes or insufficient wet out.

Fig. 2 shows a molding tool 1 that includes a mold 10, a coil assembly 20, and a clamping means 40. The coil assembly 20 may include one or a plurality of coils 21, 22, 23. This is illustrated in Fig. 2 as a first coil 21 and possibly also a second coil 22, and third coil. The coil assembly 20 may include three, four, five coils or any other reasonable number of coils.

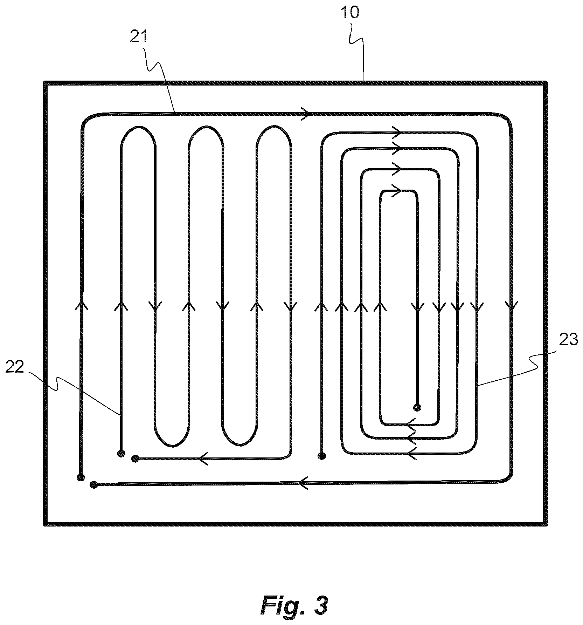

In the same way as the mold 10 might have any suitable size and shape for the application, the coils 21, 22 might have any shape, size or configuration. Examples of coil configurations are layouts generating a transversal or longitudinal flux, or a combination thereof, generating local or global circulating currents in the mold 10. In a preferred embodiment, the coil assembly 20 comprises more than one coil 21, 22, 23 covering parts of, or the entire back side of the mold 10, where the current in each coil can be individually controlled to always achieve the desired mold 10 temperature in every location. This is exemplified in Fig. 3. If the entire mold 10 is not being heated, it is preferred to have at least one coil covering the main area of the mold and at least one coil covering the perimeters of the heated area to be able to compensate for heat loss due to thermal conduction. Each coil might consist of one or multiple parallel wires (not shown) to ensure thermal management.

The clamping means 40 is configured to at least partly fixate the at least one coil 21, 22 to the mold 10. The clamping means 40 will be described more in detail with reference to Figs. 5-22.

In one embodiment, the molding tool 1 is arranged with one or more main coils arranged on the back side 12 of the mold 10 using clamping means 40. The main coils are electrically insulated from the mold 10 and are configured to inductively heat the mold 10 when a current is flowing through them. Preferably, the main coils are made of litz wires due to their flexibility and low losses at high frequencies. There can be one or several wires in parallel depending on the dimensions and application, to ensure a good efficiency of the system.

For instance, the molding tool 1 may include some kind of cooling means to cool down the temperature of mold 10 after a processing cycle. Cooling may be performed from the outer surface 12 using for example forced air and/or water or using cooling channels inside or in proximity with the mold 10 for transporting a cooling media being in gas and/or liquid form.

In order to further improve the inductive heating of the molding tool 1, soft magnetic elements and electrically conductive elements (not shown) may be placed at predetermined areas along the coil assembly 20. The soft magnetic elements are typically made of a magnetic material with small hysteresis losses. The soft magnetic elements are produced in a way to avoid induced currents in the material. Typical examples of soft magnetic materials are soft magnetic composites, sometimes referred to as powder cores, or soft ferrites. The relative permeability should be substantially larger than 1, typically 10-10000. The electrically conductive elements are typically made of highly electrically conductive material such as copper or aluminum, aimed to induce currents without creating substantial losses. The soft magnetic and electrically conductive elements are used to achieve the desired heating pattern, to concentrate the magnetic flux density, to improve the efficiency of the induction heating system, to reduce stray magnetic fields and to shield the high frequency electromagnetic field to prevent undesired areas or materials to be heated up by induction.

Turning back to Fig. 2, at least one processing means 30 is provided which is in operative communication with the coil assembly 20. The processing means 30 controls and energizes the operation of the coil assembly 20 and thereby also the inductive heating process which heats the molding tool 1 and results in the production of a composite part A. The coil(s) of the coil assembly 20 may be coupled to one and the same processing means or to different processing means. The processing means 30 is configured to generate a high frequency current in the coil assembly 20. Preferably, the processing means 30 is or comprises a frequency converter. The at least one processing means 30 is configured to generate an alternating voltage and current to the coil(s) so as to inductively heat the mold 10 of the molding tool 1 so that a part A can be produced. In some embodiments, one processing means 30 alone can control multiple coils. In other embodiments, several processing means 30 may be used to control the heating of the molding tool 1.

Preferably, the processing means 30 comprises a certain intelligence in terms of some type of microcontroller or central processing unit, memory etc. and at least one type of interface (not shown) for operating the system, either as a human machine interface in terms of a graphical display, buttons, knobs or similar, or as a communication interface to be controlled from a surveillance system such as a PC or PLC.

Turning now to Figs. 4-22, the clamping means 40 which clamps the coils 21, 22, 23/wires 211, 212, 213 to the mold 10 will be described. The principle of clamping a coil 21-23 to the outer surface 12 of the mold 10 is applicable to all types of coils, for coils consisting of one or multiple wires 211, 212, 213, clamped individually or together. Each clamping means 40 can be mounted on the mold to clamp one or several wires 211, 212 of one coil 21, one or several turns 211, 212 of the same coil 21, or several coils 21, 22 together, or a combination.

Fig. 4 schematically illustrates a part of a molding tool having two wires 211, 212 of at least one coil arranged in parallel, which are held together by a plurality of clamping means 40 along their longitudinal axis. The number of clamping means 40 may vary depending on several factors, such as the length of the coils the pattern of the coils and the size of the clamping means 40. As an example only, the clamping means 40 are arranged at a distance of 50 mm from one another.

In Fig. 4, each clamping means 40 has a first end 41 and a second end 42 which are attached to the back side 12 of the mold 10, respectively, thereby clamping the wires 211, 212 of at least one coil to the mold 10. The first and second ends 41, 42 may also be referred to as first and second side sections. Optionally, only one of the first and second ends 41, 42 are attached to the back side of the mold.

An intermediate section 43 of the clamping means 40 is elevated enough with respect to the coils/wires 211, 212 and the side sections 41, 42 to fit the coils and at least one insulating element, and keep them tightly in place with respect to the outer surface 12 of the mold 10. The intermediate section 43 may be rigid or flexible, as long as it keeps the coils in place during manufacturing of the composite part A. The elevation of the intermediate section 43 creates a void or a space between the center part of the clamping means 40 and the outer surface 12 of the mold 10. In other words, the distance between the intermediate section 43 and the back side 12 of the mold 10 defines a space within which one or more wires of one or more coils, electrically insulating material, thermally insulating material, cooling channels, and the like may be arranged and clamped. The intermediate section 43 is preferably made of a material having a thickness being less than two times the skin depth of its material at an operating frequency of the electric current configured to flow through the coils to prevent or at least reduce self-heating of the clamping means from the induction coils.

The first end 41, the second end 42 and the intermediate section 43 may either be formed as an integral body or separately from one another. At least parts of the clamping means 40 is made of metal with a relative magnetic permeability lower than 100. The clamping means 40 are preferably made of stainless steel, titanium or copper. The clamping means are preferably attached to the mold 10 by welding, such as spot welding, MIG (metal inert gas) welding, MAG (metal active gas) welding, TIG (tungsten inert gas) welding, ultrasonic welding. Alternatively, the clamping means 40 may be attached by soldering, or brazing to the mold 10. The mold is defined as the mold tool including inserts, fasteners or other arrangements mounted to it, onto which the clamping means can be attached by the welding, brazing or soldering. To be more specific, the mounted or integrated attachments described above are considered as parts of the outer surface 12 of the mold 10. As an example, if the mold is made out of carbon fiber composites, it might have metal parts attached to it from the composite manufacturing or afterwards using for example gluing; metal parts onto which the clamps can be attached using the methods described above. As another example, if the molding tool is made of carbon fiber thermoplastics, clamping means 40 made partially or entirely of polymeric material can be welded to the back side 12 of the mold 10 using for example ultrasonic or induction welding.

Turning to Fig. 5, a clamping means 40 is shown from a cross-section view. The first side section 41 of the clamping means 40 and the second side section 42 of the clamping means 40 are each attached to the back side 12 of the mold 10 on opposite sides with respect to the intermediate section 43 which extends between the two side sections 41, 42. In Fig. 5, the intermediate section 43 has an inverted U-shape and a substantially squared cross-section. Optionally, as illustrated in other drawings, the intermediate section 43 may have a more rounded shape, such as an arc-shape or the like.

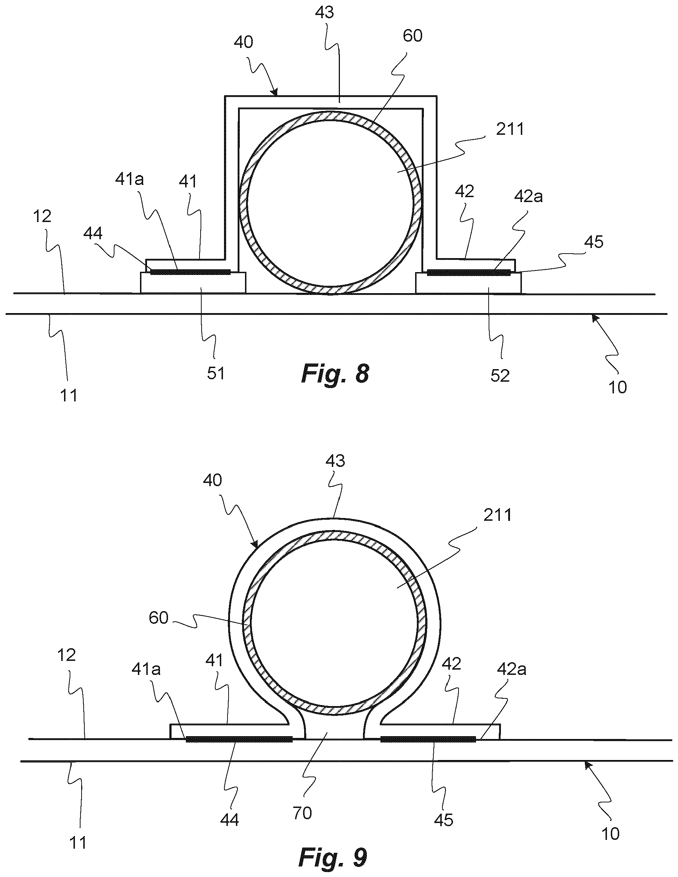

The first side section 41 of the clamping means 40 has an attachment surface 41a facing the outer surface 12 of the mold 10. A weld interface 44 is provided between the first attachment surface 41a and the outer surface 12. Similarly, the second side section 42 has a corresponding attachment surface 42a facing the outer surface 12 of the mold 10, and a weld interface 45 is provided between the attachment surface 42a and the outer surface 12, or a weld interface 48 is provided between the attachment surface 42a and a part of the first side section 41. At the respective weld interfaces 44, 45, the clamping means 40 is welded to the back side 12 of the mold 10. Optionally, as shown in Fig. 8, the attachment surface 41a, 42a is welded to a weldable element, such as a metal strip, which is in turn adhered to the back side 12 of the mold 10, defined as above, being a part of the mold 10. For instance, a metal strip is glued to the back side 12. The clamping means 40 may be attached to the outer surface 12 of the mold 10 by any one of welding, brazing or soldering.

Moreover, the first side section 41 and the second side section 42 have respective upper surfaces 41b, 42b facing away from the back side 12 of the mold 10. The upper surfaces 41b, 42b may be subjected to a welding tool, such as a spot welder, welding electrode or ultrasonic tool, or other heat generator such as soldering iron or open flame. It might also be affected by a press force during the attachment process when the clamping means 40 is to be attached to the back side 12.

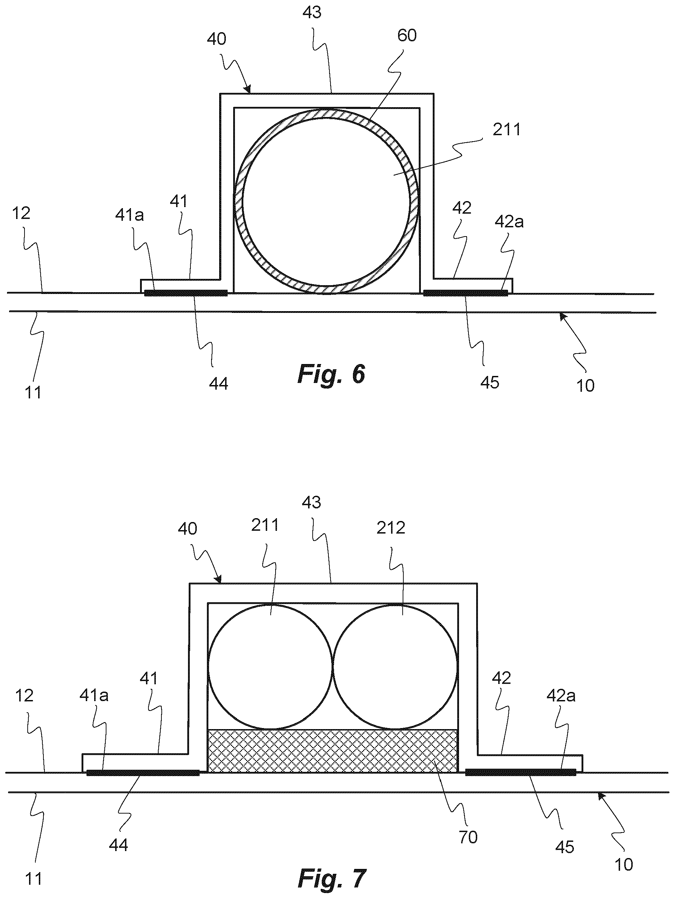

The features disclosed in relation to Fig. 5 above, i.e. the side sections 41, 42, the intermediate section 43 and the attachment surfaces 41a, 42a are all common features with the embodiments shown in Figs. 6-22.

Fig. 6 shares the features described in relation to Fig. 5 and displays a coil wire 211 clamped between the clamping means 40 and the back side 12 of the mold 10. The coil wire 211 is surrounded by an electrically insulating material 60 provided all along the circumference of the wire 211 and the outer surface 12 of the mold 10. As can be seen, the intermediate section 43 further at least partially encloses the electrically insulating material 60. Moreover, the electrically insulating material 60 is not limited to be in contact with the inner part of the intermediate section 43.

With reference to Fig. 7, two wires 211, 212 of at least one coil are arranged within the space defined by the distance between the intermediate section 43 and the back side 12 of the mold 10. Between the wires 211, 212 and the back side 12 of the mold 10, a thermally 70 insulating material is provided. The main advantage of using such a material is that the mold can be heated to a temperature higher than what the wire can withstand, but it can also save energy otherwise spent on heating up the wire through conduction.

As mentioned previously, the first and second side sections 41, 42 of the clamping means 40 may be welded to a weldable element, such as a metal strip 51, 52, which is in turn adhered to the back side 12 of the mold 10, and considered being part of the back side 12 of the mold 10. In one embodiment, the metal strips 51, 52 are glued onto the back side 12 of the mold 10. The weldable surface of each metal strip 51, 52 faces the respective attachment surfaces 41a, 42a of the clamping means 40. Between the attachment surfaces 41a, 42a and the weldable surfaces of the metals strip 51, 52, the weld interfaces 44, 45 are provided. This is shown in Fig. 8, which in all other senses is reflected in the embodiment disclosed in relation to Fig. 6.

Fig. 9 shares the features disclosed in relation to Fig. 6. However, in Fig. 9, the intermediate section 43 has a more curved, or rounded shape, and abuts the electrically insulating material 60 along the majority of the circumference of the electrically insulating material 60 which covers the wire 211 of the coil. Just like in all embodiments disclosed herein, the electrically insulating material 60 covers the wire 211 at least in this area along the longitudinal extension of the wire 211. In a region between the wire 211 of the coil with its surrounding electrically insulating material 60 and the outer surface 12 of the mold 10, a thermally insulating material 70 is provided. In Fig. 9, the thermally insulating material 70 is preferably an air gap.

Moving on to Fig. 10, two wires 211, 212 of at least one coil are arranged on the back side 12 of the mold 10. A first side section 41 and a second side section 42 of the clamping means 40 are shown as an inverted T. In this embodiment, the intermediate section 43 of the clamping means 40 is pressed, riveted or bolted to the first and second side sections 41, 42 at a press/bolt interfaces 46, 47, which are welded to the back side 12 of the mold 10 at their respective attachment surfaces 41a, 42a, thereby creating weld interfaces 44, 45. Alternatively, the first 41 and second side sections 42 are soldered or brazed to the back side 12 of the mold. The clamping means 40 may also be built up by several welded sections, where the intermediate section 43 is welded to the first and/or second side sections 41, 42.

In Fig. 11, the intermediate section 43 of the clamping means 40 is claw-shaped and is adapted to receive two wires 211, 212 of at least one coil. As for all embodiments disclosed herein, one single wire or more than two wires may be clamped by the clamping means 40. In this particular embodiment, the clamping means 40 can form a space between the wires 211, 212 and the back side 12 of the mold 10 acting as a thermal barrier. Preferably, the clamping means 40 is rather flexible so that the wires 211, 212 can be clipped in a direction towards the back side 12 of the mold 10, forming a firm attachment.

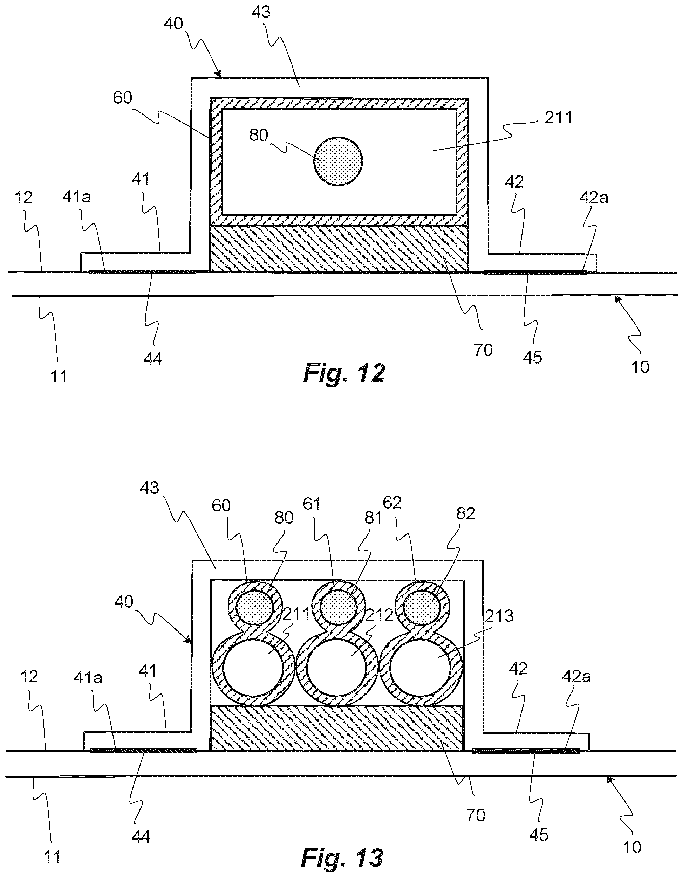

As illustrated in Figs. 12 and 13, each wire may be associated with a cooling channel 80, 81, 82. The cooling channel is either integrated in or arranged in close proximity to a corresponding wire 211, 212, 213 of at least one turn of at least one coil. The purpose of the cooling channel(s) is mainly for gas or liquid cooling, preventing overheating of the coil, heat generated by losses in the wire itself 211-213 or caused by thermal conduction from the hot mold 10. The intermediate section 43 at least partially encloses the cooling channel similarly as it encloses the coil, as well as the electrically and thermally insulating elements 60, 61, 62, 70. In Fig. 12, the coil/wire includes a cooling channel 80. Put differently, the cooling channel 80 is integrated in the wire 211 of the coil. The wire 211 is surrounded by an electrically insulating element 60, and between the electrically insulating element 60 and the back side 12 of the mold 10, a thermally insulating element 70 is provided. In Fig. 13, three wires 211, 212, 213 of at least one coil are provided. Each one of the wires 211, 212, 213 is surrounded by a respective electrically insulating element 60, 61, 62. Instead of being integrated in the coils, cooling channels 80, 81, 82 are arranged in close proximity to the coils/wires. The cooling channels 80, 81, 82 are surrounded by a material preventing the cooling media from leaking out. This material can, be the same as the one of the electrically insulating elements 60, 61, 62 associated with the respective wire 211, 212, 213.

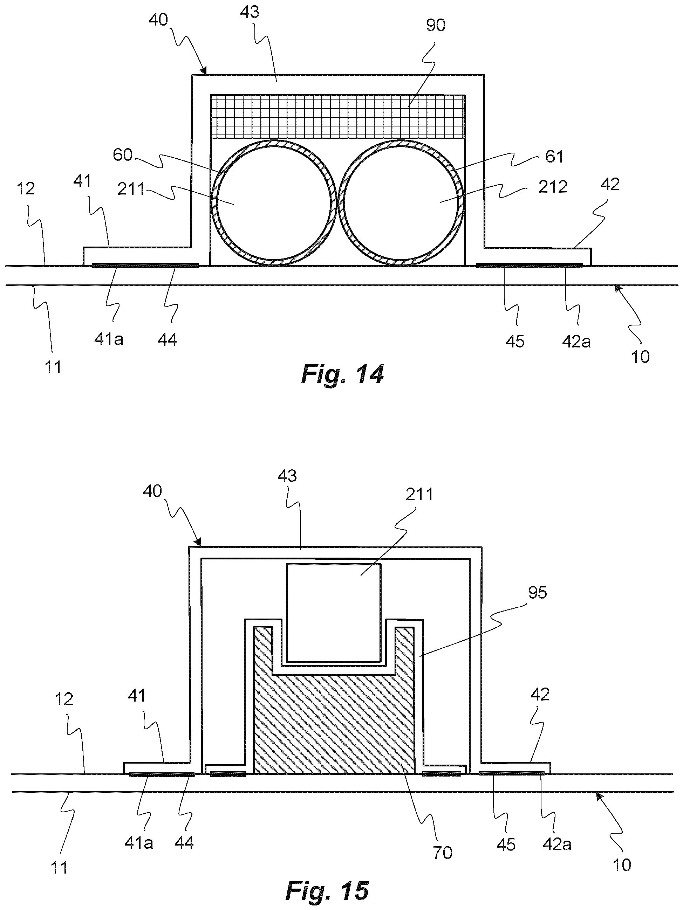

A further embodiment is shown in Fig. 14 where a soft magnetic element and/or an electrically conductive element 90 is arranged between the wires 211, 212 of at least one coil and the intermediate section 43 of the clamping means 40. The intermediate section 43 at least partially encloses the soft magnetic element and/or at least one electrically conductive element 90, just like it encloses the wires 211, 212with their surrounding electrically insulating elements 60, 61.

Turning to Fig. 15, a support 95 is welded to the back side 12 of the mold 10. The support 95 is shaped in a way such that a wire 211 fits in a depression of the support 95. In other words, the support 95 holds the coil wire 211 in place over the surface of the mold. However, the shape of the support 95 can have a lot of different shapes and is not limited to having a depression/groove or similar. The support 95 may be seen as a bridge which creates a physical distance and thereby separates the back side 12 of the mold 10 and the coil. A purpose of the support 95 is to achieve thermal insulation between the coil and the mold 10. For instance, the support 95 may be made of the same material as the clamping means 40 and attached with the same method.

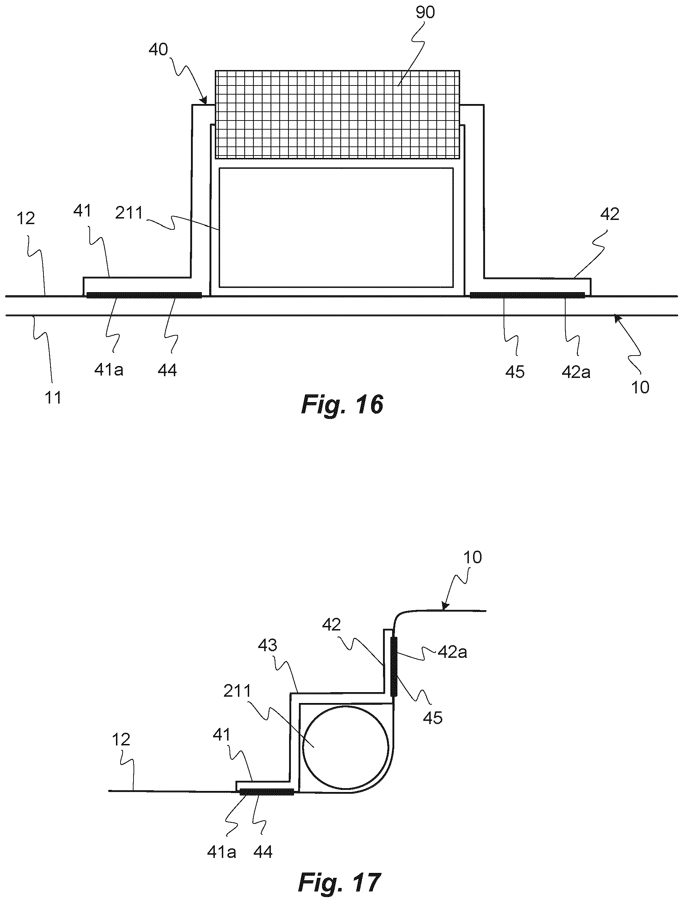

The embodiment shown in Fig. 16 corresponds to a large extent with the embodiment of Fig. 14. In Fig. 16, a soft magnetic element 90 is for example cast around the intermediate section 43 of the clamping means 40. An electrically conductive element may be a copper tube clamped around the clamping means. Moreover, the whole clamping means 40 may be an electrically conductive element with the purpose of reducing power locally. This would require a clamping means thickness of more than two times the skin depth. Between the back side 12 of the mold and the soft magnetic element 90, the wire 211 of a coil is clamped.

Moving on to Fig. 17, the first side section 41 of the clamping means 40 is attached to the back side 12 of the mold 10 by any of the ways described above, i.e. by welding, brazing or soldering. As mentioned previously, like numbers refer to like elements. The second side section 42 of the clamping means 40 is attached to a mold surface which is orthogonal to the surface onto which the first side section 41 is attached. The clamping means 40 described herein can be attached to basically any geometrical surface and is adaptable to different mold geometries. In Fig.17, the wire 211 of a coil is located between the clamping means 40 and the back side 12 of the mold 10. The intermediate section 43 has a substantially tip-like shape in this configuration. In another embodiment (not shown), the intermediate section 43 could have the shape of a smooth bend which conforms to the shape of the wire/coil to be clamped.

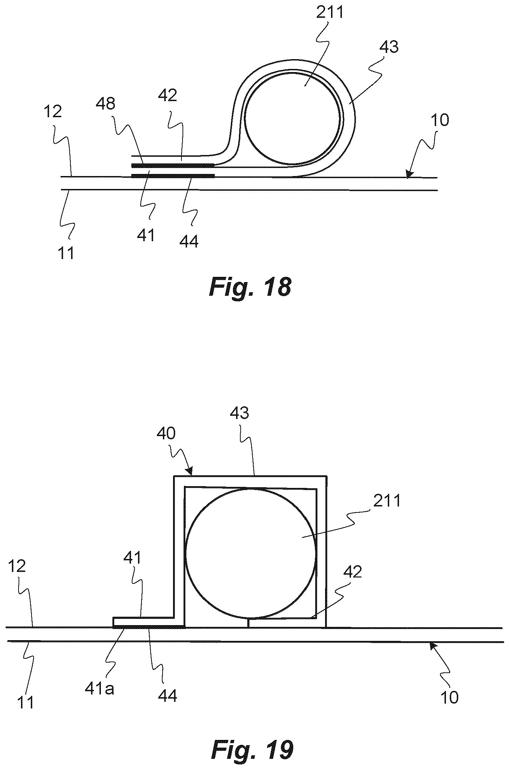

In some cases, as will be clear from Figs. 18-22, only one of the side sections, such as the first side section 41 is attached to the mold 10. In those cases, the other one of the side sections, such as the second side section 42, either is formed as a free end or is in turn attached to another part of the clamping means, such as the first side section 41, by any one of welding, brazing or soldering.

With reference to Fig. 18, the first side section 41 of the clamping means is attached to the outer surface 12 of the mold 10 at a weld interface 44. The second side section 42 is at least partially wrapped around the wire 211 of a coil and is in turn attached to the first side section 41 at another weld interface 48. It may be that the upper surface 42b of the second side section 42 is facing the upper surface 41b of the first side section 41. It may also be that the attachment surface 42a of the second side section 42 faces the upper surface 41b of the first side section 41. In any case, the clamping means surrounds the wire/coil and is welded to itself as well as the mold.

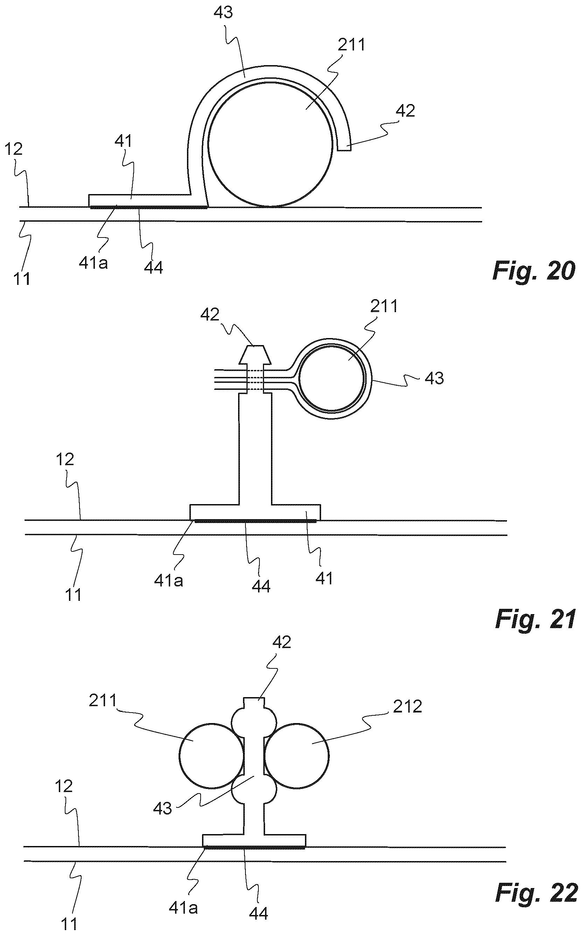

In Figs. 19 and 20, the first side section 41 of the clamping means is attached to the back side 12 of the mold 10 at a weld interface 44. The second side section 42 is loose and clamps around the wire 211 of a coil to keep the wire 211 in place on the back side 12 of the mold. In Fig. 19, the intermediate section 43 of the clamping means is substantially flat/square-shaped and in Fig. 20, the intermediate section 43 of the clamping means is rather arc-shaped.

Moving on to Fig. 21, the first side section 41 of the clamping means is attached to the outer surface 12 of the mold and the second side section 42 clamps the intermediate section 43 of the clamping means. For example, the first and second ends 41, 42 are made of a round stud with one or several barbs and the intermediate section 43 is made of a thin metal sheet of a certain material, preferably with a thickness of less than 2 times the skin depth of the material at the operating frequency, containing a deformable hole or slot that can be forced over the barbs of the stud to lock a wire 211 in place.

In Fig. 22, the first side section 41 of the clamping means is attached to the back side 12 of the mold and the wires 211, 212 of at least one coil are clamped around the clamping means. This can be explained as follows. Two litz wires 211, 212 are provided, through which a hole (not shown) is made through their cover, between the wires 211, 212. The second side section 42 of the clamping means is threaded through this hole. The wires 211, 212 are held in place by means of bulb-like elements protruding outwards from the intermediate section 43 of the clamping means. This way, the coil(s) are held in place over the back side of the mold.

It is appreciated that the wires 211, 212, 213 described above may be surrounded by electrically insulating elements. From safety, security, EMC and functionality point of view, it is beneficial that the mold 10 and the coils 21-23 and electrically insulated from each other, meaning an electrical insulation that can typically withstand several thousands of volts, during the entire lifetime of the molding tool 1. Certain types of wires, for example magnet wires or enameled wires, including litz wires already have an insulation layer due to the enamel coating, providing sufficient in some cases but not in others. In the case with litz wires, it is common to have a wrapping of for example silk, nylon, polyimide, aramid or similar to keep the strands together and to further improve the electrical insulation. Like cables, the wire can further have one or several solid polymeric layers, to improve the electrical and thermal insulation even more and to achieve for example resistance to cooling fluids or form leakage proof channels for cooling of the wire or by other reasons suitable for the application. The same reasoning applies in the case if the wire is a solid or hollow conductor such as a copper tube. Electrical and thermal insulation can also be loosely attached to the wire, partially or completely surrounding it, for example bonded or clamped in position. Figs. 4-22 schematically illustrates a selection of insulation types.

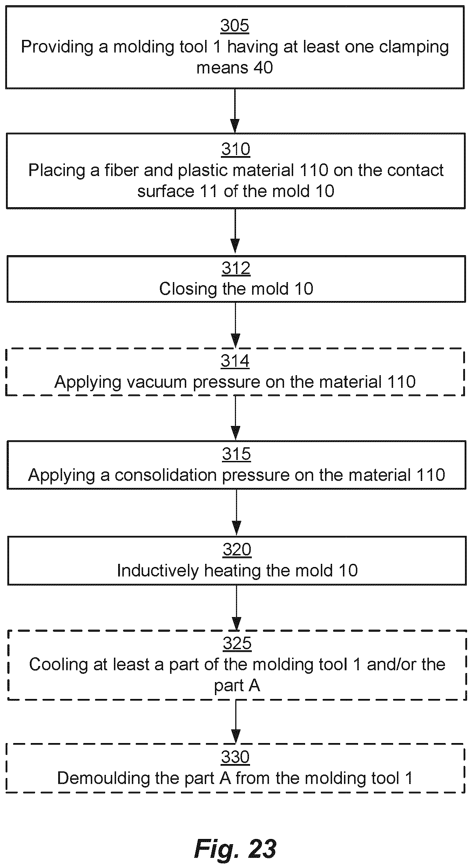

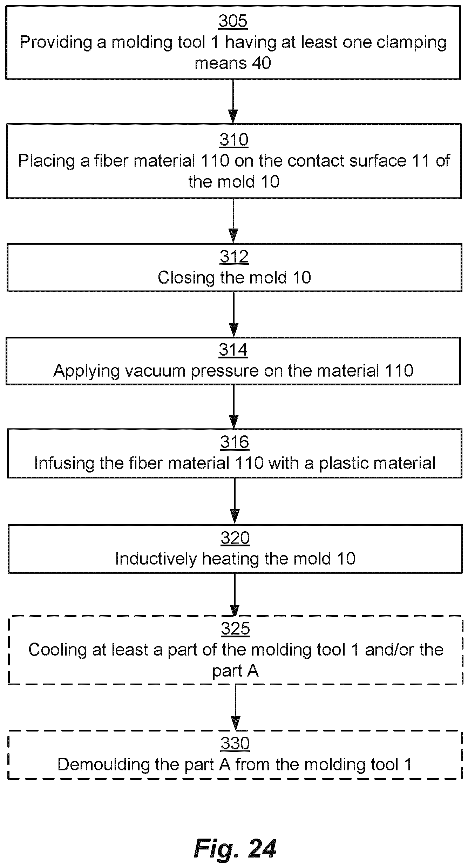

A method of producing a composite article, or part A, using the molding tool 1 is shown in Fig. 23. In the method described in relation to Fig. 23, the material to be processed, which is placed in the mold, is a mix of a fiber and plastic material. Another method is shown in Fig. 24, where the material placed in the mold is a fiber material which, during the molding process, is infused with a plastic material, so that the plastic material then forms part of the material 110 to be processed. Fig. 25 offers a schematic view of parts of these methods.

In the methods illustrated in Figs. 23-25, the material 110 to be processed may consist of technical fibers such as carbon, glass, aramid, ultra-high molecular weight polyethylene, flax or basalt fibers, or be a mix of fiber and plastic material. The material 110 may be a prepreg, sheet/bulk molding compound (SMC/BMC), comingled yarns, intermediate material or a separate fiber and plastic, where the plastic may for example be in the form of sheets or powder. The plastic component may be a thermoplastic or a thermoset and the fiber component may be fiber tows, multiaxial material, weave or random oriented fibers. The layup, number of layers, directions, size, and shape of the material 110 can vary a lot depending on the process and application, well known in the field. The material 110 can be put into the mold in a sequence, for example layer by layer or may be pre-formed before being put into the mold. The material 110 may, in addition to the fibers, also contain core/distance/sandwich material such as foam cores, honeycomb structures etc., common in many composite components, or metal inserts, typical for assembly purposes in the final application of the part A. The material 110 may even be transformed into a multi-material part A, containing both fiber composites and metal.

The method shown in Fig. 23 comprises the step of providing 305 a molding tool 1 having a mold 10 configured to be inductively heated by a coil assembly 20 which is attached to the mold 10 by a clamping means 40 according to the teachings herein. Optionally, a release agent is added to the molding tool 1 at this stage to facilitate separation of the produced part A from the mold 10. The method further comprises placing 310 a material 110 to be processed on the contact surface 11 of the mold 10. Preferably, the material 110 is a fiber and plastic material in the form of a pre-form with the similar shape as the contact surface 11, easy to put into the mold.

In this case, where the plastic is already in the mold, i.e. as a matrix material incorporated in the fiber material placed in the mold, the method further comprises closing 312 the mold 10 and applying 315 consolidation pressure on the material 110 to be processed. The mold 10 may for instance be closed by another molding tool 1 halve or by a flexible membrane or bag.

Before applying 315 consolidation pressure on the material 110 to be processed, the method may further comprise a step of applying 314 a vacuum, or near vacuum pressure on the material 110. Certain processes benefit from the reduced pressure, i.e. the vacuum pressure, on the material to remove entrapped air and thereby enhance wet out of the matrix on the fibers during the manufacturing process and thereby reduce the risk of dry-spots or voids in the produced part A.

The consolidation pressure may for example be applied by arranging a vacuum bagging unit on top of the material 110 and performing vacuum bagging. The consolidation pressure may also be applied by a press, an autoclave or just via atmospheric pressure if there is near vacuum pressure inside of the mold. In the latter case, the step of applying 315 consolidation pressure on the material 110 often means drawing vacuum in the molding tool 1. In some cases, vacuum pressure is the same as consolidation pressure.

The method which is described in relation to Fig. 23 further comprises inductively heating 320 the mold 10 containing the material 110. The heating may be done according to a predetermined time-temperature profile to consolidate and/or cure the material 110 to produce the composite part A. The mold 10 is heated by the coil assembly 20 which is in operative communication with the processing means 30 as discussed previously. The molding tool 1, or its mold 10, may be heated prior to, during and/or after the step 315 of applying pressure. Also, the pressure must not be constant during the entire process but can for example be increased when the material 110 is getting warmer to enhance part quality.

The mold 10 and the material 110 to be processed are held in this position in the molding tool 1 during a predetermined time period, typically to ensure sufficient temperature throughout the material and a proper consolidation/wet out of the fiber composite material. In the case of a thermoset, the resin, or plastic material, should be sufficiently cured before demolding, while in the case of a thermoplastic, the part becomes solid after being cooled down. Thus, eventually, a cured or consolidated material 110 is provided and forms the composite part A. This is shown schematically in Fig. 25. There are a few applicable processes for the method, for example often referred to as compression molding, stamp forming, autoclave processing, out of autoclave processing, vacuum bagging, etc.

Now turning to Fig. 24, a case where no matrix material is placed in the mold, i.e. in the case where the material 110 initially consists of fibers only, possibly in combination with core/distance/sandwich material or metal inserts etc. as described above. The method, after providing 305 a molding tool 1, includes a step of placing the fiber material 110 in the mold. Afterwards, the mold is closed 312, typically with another mold half, a flexible membrane or a bag. The closed mold may, as in the case described above, consist of a plurality of mold halves, bags or membranes, or a combination, together providing a sealed or semi-sealed mold assembly. In this case the material 110 placed on the contact surface 11 of the mold 10 may also be called a layup or pre-form of fiber material.

The method related to Fig. 24 further comprises the step of applying 314 a reduced pressure on the material 110, preferably vacuum or near vacuum pressure. The evacuation of gas may be applied in single or a plurality of openings and may be performed only at this step or during the entire production process.

The method further comprises the step of infusing 316 the material 110 in the mold 10 with a matrix material, preferably a low viscosity resin of any type. The resin in this case may also be called a plastic material. This can be done using so called vacuum infusion, where the driving force is the pressure difference between the vacuum pressure in the mold and the surrounding pressure. The infusion can also be done using a higher pressure, up to several hundred bars, often referred to as resin transfer molding RTM, high pressure resin transfer molding HPRTM, vacuum assisted resin transfer molding VARTM etc. Similar to what was discussed in relation to Fig. 23 above, the method further comprises inductively heating 320 the mold 10 containing the material 110.

In both of the methods described for producing a composite part A above, the step of heating 320 and applying pressure or infusing resin, i.e. the plastic material in the material 110 in the mold 10, may occur simultaneously. The heating may be done according to a predetermined time-temperature profile to produce the composite part A. The mold 10 is heated by the coil assembly 20 which is in operative communication with the processing means 30 as discussed previously. The molding tool 1, or its mold 10, may be heated prior to, during and/or after the step of infusing the matrix material in the case of the method described in relation to Fig. 24.

A warm tool is typically beneficial to reduce the viscosity of the resin, but typically also starts a chemical reaction to cure the resin, so different aspects apply depending on the application and choice of material. In a preferred case, a proper wet-out of the fibers by the resin is obtained, without dry-spots or voids. In this method, the typical matrix is a thermoset resin and requires the matrix to be cured. Novel plastics are continuously being developed and the method may also be used with hybrid thermoset/thermoplastic matrixes and also low viscosity thermoplastics.

All methods described herein may further comprise active or passive cooling 325 of at least a part of the molding tool 1 and/or the produced part A formed therein. Finally, the methods described further comprise demolding 330 the part A from the molding tool 1. In certain applications, the part A can be demolded at the processing temperature, which is beneficial from a cycle time perspective. Contrarily, a reduced demolding temperature is often beneficial from a part quality perspective.

Part of the methods described above in relation to Figs. 23 and 24 are illustrated in Fig. 25. The material 110 to be processed, i.e. a mix of a fiber material and a polymeric material, or a fiber material which is to be infused with a resin, or a plastic material, during the molding process as described above, is arranged 310 in the molding tool 1. The fiber material may for instance be a carbon fiber or a flax fiber material. Preferably, the mix is in the shape of a pre-form, or a piece of a web. Alternatively, the molding tool 1 is arranged in a stream-lined system where webs of material are fed into the molding tool 1 in steps. Before heating, the material 110 is shown in dashed lines. The material might extend beyond the heated area of the molding tool 1, or be located inside of the heated zone depending on the application. When the molding tool 1 is inductively heated 320 by the coil assembly driven by the processing means, the mix of fiber and polymeric material, i.e. the material 110 to be processed, is consolidated, or cured, to form a part A having a shape corresponding to that of the molding tool 1. After being cured or consolidated, the material to be processed is shown as a solid line. Once the process temperature profile has been completed, the molding tool is cooled down 325 and the part A is removed, or demolded, 330 from the molding tool. The shape of the part A corresponds to the contact surface of the mold.

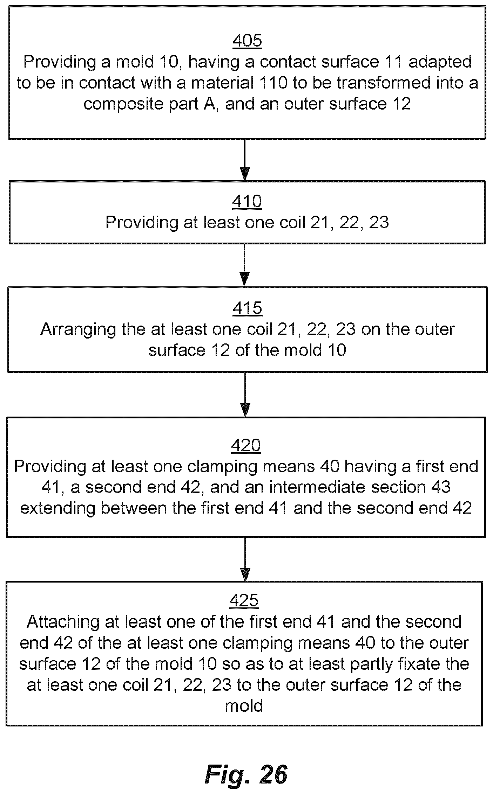

A method of manufacturing a molding tool 1 will now be described with reference to Fig. 26.

In a first step, a mold 10 which is configured to be inductively heated is provided 405. The mold 10 has a contact surface 11 and an outer surface 12, or back side. In a next step, at least one coil 21, 22, 23 is provided 410 and arranged 415 on the back side 12 of the mold 10. The coil 21, 22, 23 may be arranged in a desired pattern on the outer surface 12 of the mold 10, such that a preferred heating pattern can be achieved. A magnetic field generated by this current is configured to induce currents in at least a portion of, or parts of, the mold 10 to be heated up.

The mold 10 is configured to be heated by an alternating electric current of a certain operating frequency, flowing through the at least one coil 21, 22, 23, and the magnetic field generated by the alternating electric current is configured to induce currents in at least parts of the mold 10 to be heated.

As mentioned previously, the molding tool 1 includes a mold 10, a coil assembly 20, and a clamping means 40. For instance, the coil assembly 20 includes one single coil. The coil assembly 20 may also include several coils.

The at least one coil 21, 22, 23 is electrically insulated from the mold 10, and in operative communication with at least one processing means 30.

In a preferred embodiment, the wires 211, 212 of the et last one coil, 21, 22 consists of litz wire, i.e. a wire built up by many thin strands, individually electrically insulated and twisted to reduce high frequency losses caused by skin and proximity effects. Furthermore, the method may further comprise the step of arranging at least one soft magnetic element and/or electrically conductive element 90 at predetermined regions along the at least one coil 21, 22, 23.

Additionally, the method of manufacturing the molding tool 1 includes providing 420 at least one clamping means 40 having a first end 41, a second end 42, and an intermediate section 43 extending between the first end 41 and the second end 42 in a way described in relation to Figs. 4-15 above. Next, the method comprises attaching 425 at least the first end 41 of the at least one clamping means 40 to the outer surface 12 of the mold 10 using welding, brazing or soldering, so as to at least partly fixate the at least one coil 21, 22, 23 to the outer surface 12 of the mold.

In one embodiment, a molding tool for producing a composite part using induction heating is provided. The molding tool 1 includes a mold 10, having a contact surface 11 adapted to be in contact with a material 110 to be transformed into a composite part A, and an outer surface 12, or back side. The mold 10 is configured to be inductively heated by at least one coil 21, 22, 23 which is attached to the back side 12 of the mold 10 using clamping means 40 which are fastened to the mold 10, preferably by welding. Optionally, the clamping means 40 are indirectly welded to the mold 10 by being welded to a weldable material which is in turn attached to the back side 12 of the mold. For instance, in the case of a composite mold, a glued metal strip 51, 52 may serve as a weldable material (see Fig. 7). The clamping means 40, more specifically an intermediate section 43 of the clamping means 40, may also be screwed, bolted, riveted or pressed onto separate parts that are welded to the mold surface 12, such as for instance the T-shaped side sections 41, 42 in Fig. 9. Furthermore, the clamping means 40 may be in the shape of clips that clamp the coils 21, 22, 23 from below, i.e. the coils are clipped onto a clamping means 40 which is already in place on the outer surface 12 of the mold 10, rather than first arranging the coils and clamping them later on. A further option of clamping is to attach multiple clamping means 40 using welding, brazing or soldering over the back side 12 of the mold 10 and threading the at least one coil 21, 22, 23 through each clamping means.

The coil 21, 22, 23 is sourced by an alternating electric current of at least one frequency, which might vary over time, flowing through the at least one coil 21, 22, 23. The magnetic field generated by the current is configured to induce currents in at least parts of the mold 10 to be heated. Preferably, the at least one coil 21, 22, 23 comprises litz wires which are electrically insulated from the mold 10 and in operative communication with at least one processing means 30. The part where the clamping means 40 cover the wires 211, 212 of the coils 21, 22, such as the intermediate section 43 as described above, is thinner than two times the skin depth of the clamping means' material at the operating frequency. The skin depth depends on resistivity, permeability, operating frequency, and may be described as the depth below the surface of a conductor at which the current density has fallen to a certain degree.

## Claims

1. A molding tool (1) for producing a composite part (A) using induction heating, comprising:
a mold (10) having a contact surface (11) adapted to be in contact with a material (110) to be transformed into a composite part (A), and an outer surface (12);
at least one coil (21-23) or at least one wire (211-213) of a coil (21-23) arranged on the outer surface (12) of the mold (10); and
at least one clamping means (40) having a first end (41), a second end (42) and an intermediate section (43) extending between the first end (41) and the second end (42), wherein at least one of the first end (41) and second end (42) is attached to the outer surface (12) of the mold (10) using welding, brazing or soldering, so as to at least partly fixate the at least one coil (21-23) to the outer surface (12) of the mold (10);
wherein the intermediate section (43) at least partially encloses the at least one wire (211-213) or coil (21-23) to hold said at least one wire (211-213) or coil (21-23) in place on the outer surface (12) of the mold (10); and
wherein the at least one wire (211-213) or coil (21-23) are electrically insulated from the mold (10) and in operative communication with at least one processing means (30).

2. The molding tool according to claim 1, wherein each of the first and second ends (41, 42) of the at least one clamping means (40) has a respective attachment surface (41a, 42a) facing the outer surface (12) of the mold (10), wherein a weld interface (44, 45, 48) is provided between the respective attachment surface (41a, 42a) and the outer surface (12) of the mold (10) and/or between the respective attachment surface (41a, 42a) and a part of the clamping means (40).

3. The molding tool according to claim 1 or 2, further comprising an electrically insulating material (60-62) provided at least between the at least one wire (211-213) or coil (21-23) and the outer surface (12) of the mold (10), wherein the intermediate section (43) further at least partially encloses said electrically insulating material (60, 61, 62).

4. The molding tool according to any of the preceding claims, further comprising a thermally insulating material (70) provided between the at least one wire (211-213) or coil (21-23) and the outer surface (12) of the mold (10), wherein the intermediate section (43) further at least partially encloses said thermally insulating material (70); preferably, the thermally insulating material (70) is air.

5. The molding tool according to any of the preceding claims, further comprising at least one cooling channel (80-82) integrated in or arranged in close proximity to the at least one wire (211-213) or coil (21-23), wherein the intermediate section (43) further at least partially encloses said at least one cooling channel (80-82).

6. The molding tool according to any of the preceding claims, further comprising at least one soft magnetic element and/or at least one electrically conductive element (90) arranged at least partially between the at least one wire (211-213) or coil (21-23) and the intermediate section (43), wherein the intermediate section (43) at least partially encloses the at least one soft magnetic element and/or at least one electrically conductive element (90).

7. The molding tool according to any of the preceding claims, wherein the first end (41), the second end (42) and the intermediate section (43) are formed as an integral body or separately from one another.

8. The molding tool according to any of the preceding claims, wherein the at least one coil (21-23) comprises litz wires.

9. The molding tool according to any of the preceding claims, wherein the mold (10) is heated by an alternating electric current of a certain operating frequency, flowing through the at least one coil (21-23), wherein the magnetic field generated by said current is configured to induce currents in at least parts of the mold (10) to be heated.

10. The molding tool according to claim 9, where the intermediate section (43) is made of a material having a thickness being less than two times the skin depth of its material at the operating frequency.

11. The molding tool according to any of the preceding claims, wherein the intermediate section (43) is made of a metal, wherein said metal has a relative magnetic permeability of less than 100.

12. A method of manufacturing a molding tool according to any of claims 1-11, comprising:
providing (405) a mold (10), having a contact surface (11) adapted to be in contact with a material (110) to be transformed into a composite part (A), and an outer surface (12);
providing (410) at least one coil (21-23) or at least one wire (211-213) of a coil (21-23) and arranging (415) the same on the outer surface (12) of the mold (10);
providing (420) at least one clamping means (40) having a first end (41), a second end (42), and an intermediate section (43) extending between the first end (41) and the second end (42);
attaching (425) at least one of the first end (41) and second end (42) of the at least one clamping means (40) to the outer surface (12) of the mold (10) using welding, brazing or soldering, so as to at least partly fixate the at least one coil (21, 22) to the outer surface (12) of the mold (10);
whereby the intermediate section (43) at least partially encloses the at least one wire (211-213) or at least one coil (21-23) to hold said at least one wire (211-213) or coil (21-23) in place on the outer surface (12) of the mold (10); and
wherein the at least one wire (211-213) or coil (21-23) are electrically insulated from the mold (10) and in operative communication with at least one processing means (30).

13. Using a molding tool (1) having at least one clamping means (40) according to any of claims 1-11 for producing a composite part, comprising:
placing (310) a fiber and plastic material (110) on the contact surface (11) of the mold (10);
closing (312) the mold (10);
applying (315) a consolidation pressure on the material (110) to be processed; and
inductively heating (320) the mold (10) containing the material (110) according to a predetermined time-temperature profile to consolidate and/or cure the material (110) to produce the composite part (A).

14. The method according to claim 13, wherein, before applying (315) a consolidation pressure on the material (110) to be processed, the method further comprises a step of applying (314) vacuum pressure on the material (110).

15. The method according to claims 13 or 14, wherein the method further comprises:
cooling (325) at least a part of the molding tool (1) and/or the produced part (A); and
demolding (330) the part (A) from the molding tool (1).

16. Using a molding tool (1) having at least one clamping means (40) according to any of claims 1-11 for producing a composite part, comprising:
placing (310) a fiber material (110) to be processed on the contact surface (11) of the mold (10);
closing (312) the mold (10);
applying (314) vacuum pressure and infusing (316) the fiber material with a plastic material, the plastic material thereby forming part of the material (110) to be processed; and
inductively heating (320) the mold (10) containing the fiber and plastic material (110) according to a predetermined time-temperature profile to produce a composite part (A).

17. The method according to claim 16, wherein the method further comprises:
cooling (325) at least a part of the molding tool (1) and/or the produced part (A); and
demolding (330) the part (A) from the molding tool (1).

## Patentansprüche

1. Formwerkzeug (1) zur Herstellung eines Verbundteils (A) mittels Induktionserwärmung, aufweisend:
eine Form (10) mit einer Kontaktfläche (11), die dazu ausgestaltet ist, in Kontakt mit einem Material (110) zu sein, das in ein Verbundteil (A) umgewandelt werden soll, und einer Außenfläche (12);
zumindest eine Spule (21-23) oder zumindest ein Draht (211-213) einer Spule (21-23), die auf der Außenfläche (12) der Form (10) angeordnet ist; und
zumindest ein Spannmittel (40) mit einem ersten Ende (41), einem zweiten Ende (42) und einem sich zwischen dem ersten Ende (41) und dem zweiten Ende (42) erstreckenden Zwischenabschnitt (43), wobei zumindest eines von dem ersten Ende (41) und zweiten Ende (42) an der Außenfläche (12) der Form (10) mittels Schweißen, Hartlöten oder Löten befestigt sind, um die zumindest eine Spule (21-23) zumindest teilweise an der Außenfläche (12) der Form (10) zu fixieren;
wobei der Zwischenabschnitt (43) den zumindest einen Draht (211-213) oder Spule (21-23) zumindest teilweise umschließt, um den zumindest einen Draht (211-213) oder Spule (21-23) an der Außenfläche (12) der Form (10) festzuhalten; und
wobei der zumindest eine Draht (211-213) oder Spule (21-23) elektrisch von der Form (10) isoliert ist und in Wirkverbindung mit zumindest einem Bearbeitungsmittel (30) ist.

2. Formwerkzeug gemäß Anspruch 1, wobei jedes der ersten und zweiten Enden (41, 42) des zumindest einen Spannmittels (40) eine jeweilige Befestigungsfläche (41a, 42a) hat, die der Außenfläche (12) der Form (10) zugewandt ist, wobei eine Schweißschnittstelle (44, 45, 48) zwischen der jeweiligen Befestigungsfläche (41a, 42a) und der Außenfläche (12) der Form (10) und/oder zwischen der jeweiligen Befestigungsfläche (41a, 42a) und einem Teil des Spannmittels (40) vorhanden ist.

3. Formwerkzeug gemäß Anspruch 1 oder 2, ferner aufweisend ein elektrisch isolierendes Material (60-62), das zumindest zwischen dem zumindest einen Draht (211-213) oder Spule (21-23) und der Außenfläche (12) der Form (10) vorhanden ist, wobei der Zwischenabschnitt (43) ferner zumindest teilweise das elektrisch isolierende Material (60, 61, 62) umschließt.

4. Formwerkzeug gemäß einem der vorstehenden Ansprüche, ferner aufweisend ein wärmeisolierendes Material (70), das zwischen dem zumindest einen Draht (211-213) oder Spule (21-23) und der Außenfläche (12) der Form (10) vorhanden ist, wobei der Zwischenabschnitt (43) ferner das wärmeisolierende Material (70) zumindest teilweise umschließt; vorzugsweise ist das wärmeisolierende Material (70) Luft.

5. Formwerkzeug gemäß einem der vorstehenden Ansprüche, ferner aufweisend zumindest einen Kühlkanal (80-82), der in den zumindest einen Draht (211-213) oder Spule (21-23) integriert oder in unmittelbarer Nähe dazu angeordnet ist, wobei der Zwischenabschnitt (43) ferner den zumindest einen Kühlkanal (80-82) zumindest teilweise umschließt.

6. Formwerkzeug gemäß einem der vorstehenden Ansprüche, ferner aufweisend zumindest ein weichmagnetisches Element und/oder zumindest ein elektrisch leitfähiges Element (90), das zumindest teilweise zwischen dem zumindest einen Draht (211-213) oder Spule (21-23) und dem Zwischenabschnitt (43) angeordnet ist, wobei der Zwischenabschnitt (43) das zumindest eine weichmagnetische Element und/oder das zumindest eine elektrisch leitfähige Element (90) zumindest teilweise umschließt.

7. Formwerkzeug gemäß einem der vorstehenden Ansprüche, wobei das erste Ende (41), das zweite Ende (42) und der Zwischenabschnitt (43) als integraler Körper oder getrennt voneinander ausgebildet sind.

8. Formwerkzeug gemäß einem der vorstehenden Ansprüche, wobei die zumindest eine Spule (21-23) Hochfrequenzlitzen aufweist.

9. Formwerkzeug gemäß einem der vorstehenden Ansprüche, wobei die Form (10) durch einen elektrischen Wechselstrom mit einer bestimmten Betriebsfrequenz beheizt wird, der durch die zumindest eine Spule (21-23) fließt, wobei das durch den Strom erzeugte Magnetfeld dazu eingerichtet ist, Ströme in zumindest Teilen der zu beheizenden Form (10) zu induzieren.

10. Formwerkzeug gemäß Anspruch 9, wobei der Zwischenabschnitt (43) aus einem Material mit einer Dicke, die kleiner als das Zweifache der Eindringtiefe seines Materials bei der Betriebsfrequenz beträgt, besteht

11. Formwerkzeug gemäß einem der vorstehenden Ansprüche, wobei der Zwischenabschnitt (43) aus einem Metall ist, wobei das Metall eine relative magnetische Permeabilität von weniger als 100 hat

12. Verfahren zur Herstellung eines Formwerkzeugs gemäß einem der Ansprüche 1-11, aufweisend:
Bereitstellen (405) einer Form (10) mit einer Kontaktfläche (11), die dazu ausgesstaltet ist, in Kontakt mit einem Material (110) zu sein, das in ein Verbundteil (A) umgewandelt werden soll, und einer Außenfläche (12);
Bereitstellen (410) zumindest einer Spule (21-23) oder zumindest eines Drahtes (211-213) einer Spule (21-23) und Anordnen (415) derselben auf der Außenfläche (12) der Form (10);
Bereitstellen (420) zumindest eines Spannmittels (40) mit einem ersten Ende (41), einem zweiten Ende (42) und einem sich zwischen dem ersten Ende (41) und dem zweiten Ende (42) erstreckenden Zwischenabschnitt (43);
Befestigen (425) zumindest eines von dem ersten Ende (41) und zweiten Ende (42) des zumindest einen Spannmittels (40) an der Außenfläche (12) der Form (10) mittels Schweißen, Hartlöten oder Löten, um die zumindest eine Spule (21, 22) zumindest teilweise an der Außenfläche (12) der Form (10) zu fixieren;
wobei der Zwischenabschnitt (43) den zumindest einen Draht (211-213) oder Spule (21-23) zumindest teilweise umschließt, um den zumindest einen Draht (211-213) oder Spule (21-23) an der Außenfläche (12) der Form (10) festzuhalten; und
wobei der zumindest eine Draht (211-213) oder Spule (21-23) elektrisch von der Form (10) isoliert ist und in Wirkverbindung mit zumindest einem Bearbeitungsmittel (30) ist.

13. Verwendung eines Formwerkzeugs (1) mit zumindest einem Spannmittel (40) gemäß einem der Ansprüche 1 bis 11 zur Herstellung eines Verbundteils, aufweisend:
Platzieren (310) eines Faser- und Kunststoffmaterials (110) auf der Kontaktfläche (11) der Form (10);
Schließen (312) der Form (10);
Aufbringen (315) eines Verfestigungsdrucks auf das zu bearbeitende Material (110);
und
induktives Erwärmen (320) der Form (10), die das Material (110) enthält, gemäß einem vorbestimmten Zeit-Temperatur-Profil, um das Material (110) zu verfestigen und/oder auszuhärten, um das Verbundteil (A) herzustellen.

14. Verfahren gemäß Anspruch 13, wobei vor Aufbringen (315) eines Verfestigungsdrucks auf das zu bearbeitende Material (110) das Verfahren ferner einen Schritt zum Aufbringen (314) eines Vakuumdrucks auf das Material (110) aufweist.

15. Verfahren gemäß Anspruch 13 oder 14, wobei das Verfahren ferner aufweist:
Kühlen (325) zumindest eines Teils des Formwerkzeugs (1) und/oder des hergestellten Teils 20 (A); und
Entformen (330) des Teils (A) aus dem Formwerkzeug (1).

16. Verwendung eines Formwerkzeugs (1) mit zumindest einem Spannmittel (40) gemäß einem der Ansprüche 1-11 zur Herstellung eines Verbundteils, aufweisend:
Platzieren (310) eines zu bearbeitenden Fasermaterials (110) auf die Kontaktfläche (11) der Form (10);
Schließen (312) der Form (10);
Aufbringen (314) eines Vakuumdrucks und Einfüllen (316) des Fasermaterials mit einem Kunststoffmaterial, wobei das Kunststoffmaterial dadurch einen Teil des zu bearbeitenden Materials (110) ausbildet; und
induktives Erwärmen (320) der Form (10), die das Faser- und Kunststoffmaterial (110) enthält, gemäß einem vorbestimmten Zeit-Temperatur-Profil, um ein Verbundteil (A) herzustellen.

17. Verfahren gemäß Anspruch 16, wobei das Verfahren ferner aufweist:
Kühlen (325) zumindest eines Teils des Formwerkzeugs (1) und/oder des hergestellten Teils (A); und
Entformen (330) des Teils (A) aus dem Formwerkzeug (1).

## Revendications

1. Outil de moulage (1) pour produire une pièce composite (A) par chauffage par induction, comprenant :
un moule (10) ayant une surface de contact (11) conçue pour être en contact avec un matériau (110) à transformer en une pièce composite (A), et une surface externe (12) ;
au moins une bobine (21-23) ou au moins un fil (211-213) d'une bobine (21-23) disposée sur la surface extérieure (12) du moule (10) ; et
au moins un moyen de serrage (40) ayant une première extrémité (41), une deuxième extrémité (42) et une section intermédiaire (43) s'étendant entre la première extrémité (41) et la deuxième extrémité (42), dans lequel au moins l'une parmi la première extrémité (41) et la deuxième extrémité (42) est fixée à la surface extérieure (12) du moule (10) par soudage, brasage ou brasage tendre, de manière à fixer au moins partiellement l'au moins une bobine (21-23) à la surface extérieure (12) du moule (10) ;
dans lequel la section intermédiaire (43) renferme au moins partiellement l'au moins un fil (211-213) ou l'au moins une bobine (21-23) pour maintenir ledit au moins un fil (211-213) ou ladite l'au moins une bobine (21-23) en place sur la surface extérieure (12) du moule (10) ; et
dans lequel l'au moins un fil (211-213) ou l'au moins une bobine (21-23) sont isolés électriquement du moule (10) et en communication fonctionnelle avec l'au moins un moyen de traitement (30).

2. Outil de moulage selon la revendication 1, dans lequel chacune des première et deuxième extrémités (41, 42) de l'au moins un moyen de serrage (40) a une surface de fixation (41a, 42a) respective orientée vers la surface extérieure (12) du moule (10), dans lequel une interface de soudure (44, 45, 48) est prévue entre la surface de fixation (41a, 42a) respective et la surface extérieure (12) du moule (10) et/ou entre la surface de fixation (41a) respective, 42a) et une partie du moyen de serrage (40).

3. Outil de moulage selon la revendication 1 ou 2, comprenant en outre un matériau (60-62) électriquement isolant prévu au moins entre l'au moins un fil (211-213) ou l'au moins une bobine (21-23) et la surface extérieure (12) du moule (10), dans lequel la section intermédiaire (43) renferme en outre au moins partiellement ledit matériau (60, 61, 62) électriquement isolant.

4. Outil de moulage selon l'une quelconque des revendications précédentes, comprenant en outre un matériau (70) isolant thermiquement prévu entre l'au moins un fil (211-213) ou l'au moins une bobine (21-23) et la surface extérieure (12) du moule (10), dans lequel la section intermédiaire (43) renferme en outre au moins partiellement ledit matériau (70) isolant thermiquement ; de préférence, le matériau (70) isolant thermiquement est de l'air.

5. Outil de moulage selon l'une quelconque des revendications précédentes, comprenant en outre au moins un canal de refroidissement (80-82) intégré dans ou disposé à proximité immédiate de l'au moins un fil (211-213) ou de l'au moins une bobine (21-23), dans lequel la section intermédiaire (43) renferme en outre au moins partiellement ledit au moins un canal de refroidissement (80-82).

6. Outil de moulage selon l'une quelconque des revendications précédentes, comprenant en outre au moins un élément magnétique doux et/ou au moins un élément (90) électroconducteur disposé au moins partiellement entre l'au moins un fil (211-213) ou l'au moins une bobine (21-23) et la section intermédiaire (43), dans lequel la section intermédiaire (43) renferme au moins partiellement l'au moins un élément magnétique doux et/ou l'au moins un élément (90) électroconducteur.

7. Outil de moulage selon l'une quelconque des revendications précédentes, dans lequel la première extrémité (41), la deuxième extrémité (42) et la section intermédiaire (43) sont formées comme un corps d'un seul tenant ou séparément les unes des autres.

8. Outil de moulage selon l'une quelconque des revendications précédentes, dans lequel l'au moins une bobine (21-23) comprend des fils de Litz.

9. Outil de moulage selon l'une quelconque des revendications précédentes, dans lequel le moule (10) est chauffé par un courant électrique alternatif d'une certaine fréquence de fonctionnement, circulant à travers l'au moins une bobine (21-23), dans lequel le champ magnétique généré par ledit courant est configuré pour induire des courants dans au moins des parties du moule (10) à chauffer.

10. Outil de moulage selon la revendication 9, dans lequel la section intermédiaire (43) est constituée d'un matériau ayant une épaisseur inférieure à deux fois la profondeur de pénétration de son matériau à la fréquence de fonctionnement.

11. Outil de moulage selon l'une quelconque des revendications précédentes, dans lequel la section intermédiaire (43) est constituée d'un métal, dans lequel ledit métal a une perméabilité magnétique relative inférieure à 100.

12. Procédé de fabrication d'un outil de moulage selon l'une quelconque des revendications 1 à 11, comprenant :
la fourniture (405) d'un moule (10), ayant une surface de contact (11) conçue pour être en contact avec un matériau (110) à transformer en une pièce composite (A), et une surface externe (12) ;
la fourniture (410) d'au moins une bobine (21-23) ou d'au moins un fil (211-213) d'une bobine (21-23) et la disposition (415) de celle-ci sur la surface externe (12) du moule (10) ;
la fourniture (420) d'au moins un moyen de serrage (40) ayant une première extrémité (41), une deuxième extrémité (42), et une section intermédiaire (43) s'étendant entre la première extrémité (41) et la deuxième extrémité (42) ;
la fixation (425) d'au moins une parmi la première extrémité (41) et la deuxième extrémité (42) de l'au moins un moyen de serrage (40) à la surface extérieure (12) du moule (10) par soudage, brasage ou brasage tendre, de manière à fixer au moins partiellement l'au moins une bobine (21, 22) à la surface extérieure (12) du moule (10) ;
dans lequel la section intermédiaire (43) renferme au moins partiellement l'au moins un fil (211-213) ou l'au moins une bobine (21-23) pour maintenir ledit au moins un fil (211-213) ou ladite l'au moins une bobine (21-23) en place sur la surface extérieure (12) du moule (10) ; et
dans lequel l'au moins un fil (211-213) ou l'au moins une bobine (21-23) sont isolés électriquement du moule (10) et en communication fonctionnelle avec l'au moins un moyen de traitement (30).

13. Utilisation d'un outil de moulage (1) ayant au moins un moyen de serrage (40) selon l'une quelconque des revendications 1 à 11 pour produire une pièce composite, comprenant :
le placement (310) d'un matériau fibreux et plastique (110) sur la surface de contact (11) du moule (10) ;
la fermeture (312) du moule (10) ;
l'application (315) d'une pression de consolidation sur le matériau (110) à traiter ; et
le chauffage (320) par induction du moule (10) contenant le matériau (110) conformément à un profil temps-température prédéterminé pour consolider et/ou durcir le matériau (110) pour produire la pièce composite (A) .

14. Procédé selon la revendication 13, dans lequel, avant l'application (315) d'une pression de consolidation sur le matériau (110) à traiter, le procédé comprend en outre une étape d'application (314) d'une pression sous vide sur le matériau (110).

15. Procédé selon les revendications 13 ou 14, dans lequel le procédé comprend en outre :
le refroidissement (325) d'au moins une partie de l'outil de moulage (1) et/ou de la pièce (A) produite ; et
le démoulage (330) de la pièce (A) de l'outil de moulage (1).

16. Utilisation d'un outil de moulage (1) ayant au moins un moyen de serrage (40) selon l'une quelconque des revendications 1 à 11 pour produire une pièce composite, comprenant :
le placement (310) d'un matériau fibreux (110) à traiter sur la surface de contact (11) du moule (10) ;
la fermeture (312) du moule (10) ;
l'application (314) d'une pression sous vide et l'infusion (316) du matériau fibreux avec un matériau plastique, le matériau plastique formant ainsi une partie du matériau (110) à traiter ; et
le chauffage (320) par induction du moule (10) contenant le matériau fibreux et plastique (110) conformément à un profil temps-température prédéterminé pour produire une pièce composite (A).

17. Procédé selon la revendication 16, dans lequel le procédé comprend en outre :
le refroidissement (325) d'au moins une partie de l'outil de moulage (1) et/ou de la pièce (A) produite ; et
le démoulage (330) de la pièce (A) de l'outil de moulage (1).
